# EUROPÄISCHE PATENTSCHRIFT

(11) **EP 4 006 400 B1**
(45) Veröffentlichungstag und Bekanntmachung des Hinweises auf die Patenterteilung: **01.11.2023**
(21) Anmeldenummer: 21207222.7
(22) Anmeldetag: 09.11.2021
(51) Int. Cl.: F16L 55/053, F15B 1/04, A47J 31/00, A47J 31/46

(54) **DRUCKAUSGLEICHSVORRICHTUNG**
PRESSURE RELIEF DEVICE
DISPOSITIF DE COMPENSATION DE PRESSION

(30) Priorität: 26.11.2020 DE 102020131306
(43) Veröffentlichungstag der Anmeldung: 01.06.2022
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- AU-B2- 2014 364 880
- DE-A1-102015 203 231
- GB-A- 1 456 274
- US-A- 5 385 172
- US-A- 5 813 318
- US-B1- 6 997 523

## Beschreibung

Die Erfindung betrifft eine Druckausgleichsvorrichtung zum Ausgleich von Druckschwankungen eines Fluids in einer Fluidleitung mit einem Gehäuse, das einen Anschluss zum Anschließen der Fluidleitung aufweist, und einem Druckausgleichselement, das zum Ausgleich der Druckschwankungen gegenüber dem Gehäuse bewegbar angeordnet ist. Die Erfindung betrifft ferner ein Verfahren zum Ausgleich von Druckschwankungen eines Fluids in einer Fluidleitung sowie eine Vorrichtung, insbesondere einem Getränkeautomaten, mit einer Druckausgleichsvorrichtung.

Druckausgleichsvorrichtungen werden in ganz unterschiedlichen Bereichen der Technik verwendet und vor allem dann eingesetzt, wenn ein Fluid innerhalb von Fluidleitungen aufgrund von Temperaturänderungen expandiert oder kontrahiert. Durch die Expansion bzw. Kontraktion des Fluids in den Fluidleitungen kommt es zu Druckschwankungen innerhalb der Fluidleitungen, welche durch die Druckausgleichsvorrichtung teilweise oder vollständig ausgeglichen werden, damit das Leitungssystem oder die an dieses angeschlossenen Vorrichtungen durch die Druckschwankungen nicht beeinträchtigt oder beschädigt werden.

Bekannte Druckausgleichsvorrichtungen weisen ein Gehäuse mit einem Anschluss auf, an welchen die Fluidleitung, wie beispielsweise ein Rohr oder ein Schlauch, angeschlossen wird. Über den Anschluss wird das Fluid in die Druckausgleichsvorrichtung hineingeführt. Im Inneren der Druckausgleichsvorrichtung ermöglicht ein Druckausgleichselement den Ausgleich der Druckschwankungen des Fluids in der Fluidleitung, indem dieses gegenüber dem Gehäuse bewegbar angeordnet ist und auf diese Weise einen Druckausgleichsraum variabler Größe bildet.

Im Bereich der Heizungstechnik werden beispielsweise Ausdehnungsgefäße häufig als Druckausgleichsvorrichtungen verwendet, bei denen eine innerhalb eines Gehäuses angeordnete, flexible Membrane zum Zwecke des Druckausgleichs gegenüber dem Gehäuse bewegbar aufgenommen ist. Auf der einen Seite der flexiblen Membrane liegt das Fluid an, so dass diese bei einer Druckschwankung des Fluids verformt und gegenüber dem Gehäuse bewegt wird, wodurch sich ein variabler Druckausgleichsraum ergibt und die Druckschwankung entsprechend ausgeglichen wird. Der Druck innerhalb eines Heizungssystems wird auf diese Weise im Wesentlichen konstant gehalten.

Bei solchen Druckausgleichsvorrichtungen wird die Membrane an der dem Fluid gegenüberliegenden Seite häufig zusätzlich mit einem Schutzgas, insbesondere Stickstoff, beaufschlagt. Das Schutzgas bildet einen dem Druck des Heizungssystems entgegenwirkenden Druckspeicher und dient ferner dazu, eine Versprödung der Membrane im Vergleich zu einer Beaufschlagung mit Luftsauerstoff zu verzögern und so die Einsatzzeit der Vorrichtung zu erhöhen. Aufgrund der erforderlichen Beaufschlagung der Membrane mit Stickstoff erfordern derartige Druckausgleichsvorrichtungen bauartbedingt einen hohen Fertigungsaufwand, da beispielsweise das Gehäuse gasdicht und mit einem Befüllanschluss, wie beispielsweise einem Ventil, auszugestalten ist.

Die DE 10 2015 203 231 A1 zeigt einen Schwingungstilger mit einer Volumenaufnahme, die nicht linear ausgeführt ist. Die GB 1 456 274 A zeigt eine Bremsvorrichtung für Fahrzeugbremsen. Die US 6,997,523 B1 zeigt ein Fluiddämpfungssystem, ebenfalls für Fahrzeugbremsen. Die AU 2014364880 B2 zeigt eine Druckreduzierungsvorrichtung mit einem gegen eine Druckkammer bewegbar angeordneten Kolben. Aus der US 5,385,172 ist eine Druckausgleichsvorrichtung für fluidische Anwendungen mit einem bewegbaren Kolben bekannt. Die EP 2 067 423 A zeigt ein Mehrfunktionenventil für Getränkemaschinen.

Obschon bekannte Druckausgleichsvorrichtungen für eine Vielzahl von Anwendungen, etwa in der Heizungs- und Sanitärtechnik, durchaus geeignet sind, so gibt es gleichwohl auch solche Anwendungen, bei denen ein geringer Fertigungsaufwand und eine damit einhergehende kostengünstige Fertigung im Vordergrund steht, bspw. in Haushaltsgeräten, wie etwa Kaffeemaschinen und ähnlichen Vorrichtungen.

Der vorliegenden Erfindung liegt daher die **Aufgabe** zugrunde, eine Druckausgleichsvorrichtung zu schaffen, die sich durch einen einfachen Aufbau auszeichnet.

Zur Lös u n g der vorstehenden Aufgabe wird eine Druckausgleichsvorrichtung mit den Merkmalen des Patentanspruchs 1 vorgeschlagen.

Durch die Ausbildung des Druckausgleichselements als bewegbarer Kolben ergibt sich ein einfacher Aufbau der Druckausgleichsvorrichtung. Die Druckausgleichsvorrichtungen kann kostengünstig gefertigt und für eine Vielzahl von Anwendungen eingesetzt werden. Aufwendige Montage- und Fertigungsmaßnahmen, wie das Abdichten einer Membrane zwischen zwei Gehäusehälften oder das einseitige Beaufschlagen mit Schutzgas, wie es bei aus dem Stand der Technik bekannten Lösungen erforderlich ist, entfallen. Im Falle etwaiger Druckschwankungen eines Fluids in der Fluidleitung bewegt sich der Kolben gegenüber dem Gehäuse, wodurch ein Druckausgleichsraum variabler Größe entsteht, durch welchen die Druckschwankungen ausgeglichen werden.

Eine vorteilhafte Weiterbildung der Erfindung sieht vor, dass der Kolben zwischen zwei Anschlägen hin und her bewegbar ist. Durch die Anschläge lässt sich die Bewegung des Kolbens beschränken, indem die Anschläge Stellungen des Kolbens, in welchen der Kolben an einem der Anschläge anschlägt, festlegen. Es ist möglich, über die Anschläge den Druckausgleichsraum, insbesondere den maximalen Druckausgleichsraum, festzulegen. Einer der Anschläge kann dabei die Bewegung des Kolbens bei einem hohen Druck des Fluids in der Fluidleitung festlegen. Der andere Anschlag kann die Bewegung des Kolbens bei einem niedrigen Druck des Fluids in der Fluidleitung festlegen. Zumindest ein Anschlag kann als Bestandteil des Gehäuses, insbesondere als Bestandteil des Anschlusses, ausgestaltet sein. Zumindest ein Anschlag, insbesondere beide Anschläge, können als Anschlagfläche ausgestaltet sein.

Es hat sich darüber hinaus bewährt, wenn an der Fluidseite des Kolbens der Druck des Fluids und an der gegenüberliegenden Trockenseite des Kolbens der Umgebungsdruck anliegt. Die Fluidseite des Kolbens kann einer Stirnseite des Kolbens entsprechen. Die Trockenseite kann der gegenüberliegenden Stirnfläche des Kolbens entsprechen. Es ist möglich, dass insbesondere die Trockenseite des Kolbens zusätzlich zu dem Umgebungsdruck mit einer Kraft, wie beispielsweise mit einer Federkraft einer Feder, beaufschlagt wird.

Erfindungsgemäß ist der Kolben in einer Kolbenaufnahme geführt. Durch die Kolbenaufnahme lässt sich die Bewegung des Kolbens auf konstruktiv einfache Art und Weise führen. Die Kolbenaufnahme kann dabei als Teil des Gehäuses oder alternativ als separates Bauteil ausgestaltet sein. Die Ausgestaltung als Teil des Gehäuses kann dabei die Anzahl an Einzelteilen der Druckausgleichsvorrichtung reduzieren. Durch die Ausgestaltung der Kolbenaufnahme als separates Bauteil können sich beispielsweise Montagevorteile ergeben, etwa indem die Bestandteile der Druckausgleichsvorrichtung zunächst separat gefertigt und anschließend montiert werden. Es hat sich im Zusammenhang mit der Ausgestaltung der Kolbenaufnahme äußerst bewährt, wenn die Kolbenaufnahme einstückig ausgestaltet ist. Die Kolbenaufnahme kann als Deckel oder Kappe ausgestaltet sein, wobei der Kolben innerhalb der Kolbenaufnahme aufnehmbar ist. Die Kolbenaufnahme kann topfförmig ausgestaltet sein Der Kolben kann koaxial zur Hauptachse der Kolbenaufnahme geführt sein. Der Kolben kann innerhalb der Kolbenaufnahme linear geführt sein.

In diesem Zusammenhang ist es vorteilhaft, wenn der Kolben über Dichtmittel gegenüber der Kolbenaufnahme abgedichtet ist. Hierdurch lässt sich vermeiden, dass das Fluid von der Fluidseite des Kolbens auf die Trockenseite des Kolbens gelangt. Die Dichtmittel können hierbei unterschiedlich ausgestaltet sein. So ist es beispielsweise denkbar, dass eines der Dichtmittel als umfangsseitige Umlaufdichtung und das andere Dichtmittel als stirnflächenseitige Flächendichtung ausgestaltet ist. Die Umlaufdichtung kann an der Mantelfläche des Kolbens angeordnet sein. Die Flächendichtung kann an einer Stirnfläche, insbesondere auf der Trockenseite des Kolbens, angeordnet sein. Es ist möglich, dass die Flächendichtung, insbesondere bei hohen Drücken des Fluids in der Fluidleitung die Dichtwirkung verbessert. Die Dichtmittel können als O-Ring ausgestaltet sein. Alternativ zu der Abdichtung über mehrere Dichtmittel ist es ebenso möglich, dass der Kolben über ein Dichtmittel, insbesondere einen O-Ring, abgedichtet ist.

Vorteilhafterweise weist die Kolbenaufnahme auf der Trockenseite des Kolbens eine Druckausgleichsöffnung auf. Hierdurch kann auf der Trockenseite des Kolbens ein konstanter Druck, welcher insbesondere dem Umgebungsdruck entspricht, erreicht werden. Es ist möglich, dass die Druckausgleichsöffnung als Bohrung ausgestaltet ist. Für den Fall einer als topfförmigen Deckel oder Kappe ausgestalteten Kolbenaufnahme ist es möglich, dass die Druckausgleichsöffnung am Boden der Kolbenaufnahme angeordnet ist.

Erfindungsgemäß ist ferner vorgesehen, dass die Kolbenaufnahme und der Kolben eine unlösbar an dem Gehäuse montierbare Montageeinheit bilden. Im Falle von Druckschwankungen, insbesondere bei in der Fluidleitung auftretenden Druckstößen, wird durch die unlösbare Verbindung eine fluiddichte Montage an dem Gehäuse sichergestellt. Die Montageeinheit kann in nur einem Montageschritt an dem Gehäuse montiert werden, wodurch der Montageaufwand der Druckausgleichsvorrichtung verringert werden kann. Der Kolben kann in die Kolbenaufnahme einsteckbar sein. Es ist möglich, dass die Kolbenaufnahme mindestens ein Befestigungsmittel zur unlösbaren Befestigung an dem Gehäuse aufweist, welches zur Montage der Montageeinheit dient. Das Befestigungsmittel kann als Schnapp- oder Rasthaken oder nach Art einer Klebeverbindung ausgestaltet sein. Es ist möglich, dass die Montageeinheit steck- oder klipsbar an dem Gehäuse, insbesondere an einem Anschluss, montierbar ist.

Eine erfindungsgemäße Alternative sieht vor, dass die Montageeinheit lösbar an dem Gehäuse montierbar ist. Die Montageeinheit kann dabei steck-, klips- oder schraubbar an dem Gehäuse, insbesondere an einem Anschluss, lösbar montierbar sein. Das Befestigungsmittel kann als lösbarer Schnapp- oder Rasthaken oder nach Art eines Gewindes ausgestaltet sein.

Eine weitere vorteilhafte Ausgestaltung der Erfindung sieht vor, dass die Kolbenaufnahme umfangsseitig gegenüber dem Gehäuse über eine Dichtung abgedichtet ist. Hierdurch lässt sich vermeiden, dass Fluid aus der Fluidleitung über die Verbindungsstelle der Montageeinheit an dem Gehäuse austritt. Die Dichtung kann als Umfangsdichtung, insbesondere als O-Ring, ausgestaltet sein. Es ist möglich, dass die Dichtung umfangsseitig an der Mantelfläche der Kolbenaufnahme angeordnet ist.

Erfindungsgemäß ist die Montageeinheit an einem Anschluss des Gehäuses montiert. Durch den weiteren Anschluss lässt sich die Montageeinheit, also die Kolbenaufnahme und der Kolben, auf montagefreundliche Art und Weise an dem Gehäuse montieren. Während an dem ersten Anschluss der Druckausgleichsvorrichtung eine Fluidleitung angeschlossen werden kann, kann an dem weiteren Anschluss die Montageeinheit, beispielsweise durch Klipsen, Stecken oder Schrauben, montiert werden. Es ist möglich, dass zur schnellen Montage der Anschluss als Schnellverbinderanschluss ausgestaltet ist. Über den Schnellverbinderanschluss lässt sich die Montageeinheit ohne weitere Hilfsmittel direkt an dem Anschluss montieren.

Erfindungsgemäß ist ferner vorgesehen, dass der Anschluss der Montageeinheit und der Anschluss der Fluidleitung baugleich ausgestaltet sind und die Montageeinheit wahlweise an einem der Anschlüsse montierbar ist. Durch die baugleiche Ausgestaltung der Anschlüsse ist es möglich, die Druckausgleichsvorrichtung durch wahlweise Montage der Montageeinheit an einem der Anschlüsse besonders flexibel für den jeweiligen Anwendungsfall anzupassen. So ist es beispielsweise denkbar, dass die Montageeinheit an den ersten Anschluss und die Fluidleitung an den zweiten Anschluss angeschlossen werden. Alternativ ist es ebenso möglich, die Fluidleitung an den ersten Anschluss und die Montageeinheit an den zweiten Anschluss anzuordnen. Durch die baugleiche Ausgestaltung der Anschlüsse, beispielsweise als Schnellverbinderanschlüsse, wird der Aufbau der Druckausgleichsvorrichtung vereinfacht. Es ist möglich, dass beide Anschlüsse als topfförmige Anschlüsse ausgestaltet sind.

Es hat sich darüber hinaus als vorteilhaft erwiesen, wenn an dem Anschluss der Fluidleitung ein Schnellverbinder zur lösbaren Aufnahme der Fluidleitung montiert ist. Auf diese Weise lässt sich ohne großen Montageaufwand die Fluidleitung an dem Anschluss montieren und demontieren. Der Schnellverbinder kann ein Klemmelement und eine Lösebetätigung aufweisen. Das Klemmelement kann als Klemmring ausgestaltet sein, welcher bei einer im Anschluss aufgenommenen Fluidleitung, wie beispielsweise einem Rohr oder einem Schlauch, die Fluidleitung klemmend im Anschluss befestigt. Die Lösebetätigung kann durch einen Benutzer betätigt werden, wodurch die klemmende Befestigung des Klemmelements aufgehoben und die Fluidleitung von dem Anschluss demontiert werden kann. Die Lösebetätigung kann hierbei als Druckbetätigung ausgestaltet sein. Zur Montage des Schnellverbinders an dem Anschluss kann der Anschluss als, insbesondere topfförmiger, Schnellverbinderanschluss ausgestaltet sein. Es ist möglich, dass der Schnellverbinder an dem Anschluss der Fluidleitung demontierbar ist. Hierdurch kann der Anschluss der Fluidleitung wahlweise zum Anschluss der Montageeinheit umfunktioniert werden. Im Zusammenhang mit der Ausgestaltung des Schnellverbinders ist es insbesondere möglich, dass der Anschluss der Fluidleitung ferner ein Dichtmittel aufweist, welches die Fluidleitung gegenüber dem Anschluss abdichten kann.

Erfindungsgemäß ist vorgesehen, dass die Anschlüsse jeweils mindestens zwei in axialer Richtung beabstandete Anschlagflächen aufweisen, wobei über die eine Anschlagfläche die Lage der Montageeinheit und über die andere Anschlagfläche die Lage der Fluidleitung festlegbar ist. Hierdurch ist es in konstruktiv einfache Art und Weise möglich, eine sichere Montage der Montageeinheit sowie einen sicheren Anschluss der Fluidleitung zu ermöglichen. Die Anschlagflächen können durch eine Querschnittsänderung des jeweiligen Anschlusses gebildet werden. Die Anschlagfläche zur Festlegung der Lage der Fluidleitung kann eine Doppelfunktion aufweisen. So ist es möglich, dass die Anschlagfläche zur Festlegung der Lage der Fluidleitung gleichzeitig als Anschlag des Kolbens zur Beschränkung der Bewegung des Kolbens ausgestaltet ist.

Vorteilhafterweise ist das Gehäuse einstückig ausgestaltet. Das Gehäuse kann als I-, L-, X-, Y- oder T-förmiges Gehäuse ausgestaltet sein. Weitere Formen sind ferner möglich. Es ist möglich, dass das I- oder L-förmige Gehäuse zwei Anschlüsse zum Anschließen einer Fluidleitung und der Montageeinheit aufweist. Es ist überdies möglich, dass das T-förmige Gehäuse drei Anschlüsse aufweist, an welche wahlweise Fluidleitungen und die Montageeinheit anschließbar ist.

Ferner hat es sich als bewährt, wenn das Gehäuse als Durchflussgehäuse mit einem dritten Anschluss zum Anschließen einer zweiten Fluidleitung ausgestaltet ist. Durch diese Ausgestaltung lässt sich die Druckausgleichsvorrichtung auf besonders einfache Art und Weise an mehrere Fluidleitungen anschließen. So ist es möglich, dass das Fluid von der einen Fluidleitung aus durch das Gehäuse zu der anderen Fluidleitung hin strömen kann. Der dritte Anschluss kann baugleich zu einem oder beiden Anschlüssen ausgestaltet sein. Die Montageeinheit oder die Kolbenaufnahme kann an dem dritten Anschluss des Gehäuses montiert sein. Es ist möglich, dass die Druckausgleichsvorrichtung mit dem als Durchflussgehäuse ausgestalteten Gehäuse als Fluidleitungsverbinder dient. Alternativ zur Ausgestaltung als Durchflussgehäuse ist es ebenso möglich, das Gehäuse als Stauraumgehäuse, in welchem sich das Fluid von dem Anschluss der Fluidleitung aus zur Montageeinheit oder der Kolbenaufnahme hin staut, auszugestalten.

Eine weitere vorteilhafte Ausgestaltung der Erfindung sieht einen an dem Kolben angeordneten Indikator zur Anzeige des Drucks in der Fluidleitung vor. Der Indikator zeigt den Druck in der Fluidleitung an, indem sich dessen Position in Abhängigkeit des Drucks vom Fluid in der Fluidleitung ändert. Es ist denkbar, dass der Indikator an einer Stirnseite des Kolbens, insbesondere auf der Trockenseite des Kolbens, angeordnet ist. Der Kolben kann in Abhängigkeit des Drucks in der Fluidleitung bewegt werden, so dass der Indikator an der Stirnseite unterschiedliche Drücke in der Fluidleitung anzeigen kann. Es ist denkbar, dass der Indikator als, insbesondere an der Stirnseite des Kolbens angeordneter, Indikatorpin ausgestaltet ist. Der Indikatorpin kann in einer vorteilhaften Ausgestaltung durch die Druckausgleichsöffnung hindurch mit dem Kolben bewegt werden. Die Druckausgleichsöffnung erfüllt hierbei eine Doppelfunktion. Der Indikator kann einstückig als Bestandteil des Kolbens ausgestaltet sein. Der Indikator kann farbliche Komponenten, bspw. eine farbige Oberfläche, aufweisen. Es ist darüber hinaus denkbar, dass der Indikator als Auslöseelement eines mechanischen und/oder elektrischen Schalters dient, welcher beispielsweise die Überwachung des Druckes innerhalb der Fluidleitung ermöglicht.

Vorteilhafterweise ist der Kolben über eine auf dessen Trockenseite angeordnete Feder in Richtung dessen Fluidseite vorgespannt. Hierdurch lässt sich auf konstruktiv einfache Art der in der Fluidleitung erforderliche Minimaldruck festlegen, ab welchem der Kolben gegenüber dem Gehäuse bewegt wird. Es ist möglich, dass die Feder als Druckfeder ausgestaltet ist. Ferner ist es möglich, dass die Feder einen Bestandteil der Montageeinheit bildet. Die Feder kann von der, insbesondere topfförmigen, Kolbenaufnahme aufgenommen sein. Es ist möglich, dass die Feder den Kolben gegenüber der Kolbenaufnahme vorspannt. Es ist möglich, dass die Feder sich einseitig gegenüber einem der Anschläge zur Festlegung der Bewegung des Kolbens abstützt. Es ist möglich, dass der an der Stirnseite des Kolbens angeordnete Indikator, insbesondere der Indikatorpin, im Inneren der Feder entlang der Hauptachse der Feder bewegbar ist.

In diesem Zusammenhang hat es sich als vorteilhaft erwiesen, wenn der Kolben eine Federaufnahme zur Aufnahme der eingefederten Feder aufweist. Die Federaufnahme kann die Feder in deren eingefederten Zustand zumindest teilweise oder vollständig aufnehmen. Hierdurch wird die Funktionalität des Anschlags zur Festlegung der Bewegung des Kolbens beibehalten. Die Federaufnahme kann korrespondierend zur Feder ausgestaltet sein. Die Federaufnahme kann an einer Stirnseite des Kolbens, insbesondere auf dessen Trockenseite, angeordnet sein. Die Federaufnahme kann als Umlaufnut auf einer Stirnseite des Kolbens ausgestaltet sein.

Es hat sich darüber hinaus bewährt, wenn der Kolben auf dessen Fluidseite eine Ausnehmung aufweist. Die Ausnehmung kann an einer Stirnfläche des Kolbens angeordnet sein. Die Ausnehmung kann als Bohrung, insbesondere Sacklochbohrung, ausgestaltet sein. Die Hauptachse der Ausnehmung kann koaxial zur Hauptachse des Kolbens verlaufen.

Es wird darüber hinaus zur Lös u n g der vorstehend genannten Aufnahme bei einer Vorrichtung, insbesondere einem Getränkeautomaten, mit einem Boiler zum Erwärmen eines Fluids, einem Hauptventil zur Entnahme des Fluids über eine Fluidleitung und einer Druckausgleichsvorrichtung zum Ausgleich von Druckschwankungen des Fluids in der Fluidleitung infolge von Temperaturschwankungen des Fluids vorgeschlagen, dass die Druckausgleichsvorrichtung eines oder mehrere der vorstehenden Merkmale aufweist. Es ergeben sich die vorstehend im Zusammenhang mit der Druckausgleichsvorrichtung erläuterten Vorteile.

Eine vorteilhafte Ausgestaltung der Erfindung sieht vor, dass das Hauptventil als direktschaltendes Ventil ausgestaltet ist. Das Ventil kann als 3/2-Wege-Ventil ausgebildet sein. Hierdurch ist es möglich, dass das Ventil den Fluidleitungsauslass entlastet, um den Fluidauslass beispielsweise bei einer Getränkeentnahme vollständig zu entleeren.

Alternativ zu der Ausgestaltung als direktschaltendes Ventil ist es ebenso möglich, dass das Hauptventil als eigenmediumbetätigbares Servoventil, insbesondere als Membranventil, ausgestaltet ist. Es ist möglich, dass das Servoventil über ein Vorsteuerventil betätigbar ist. Auch eine Ausgestaltung als direktschaltbares Membranventil ist möglich.

Bei einem Verfahren zum Ausgleich von Druckschwankungen eines Fluids in einer Fluidleitung mit einer Druckausgleichsvorrichtung, die eines oder mehrere der vorstehend beschriebenen Merkmale aufweist, wird zur **Lösung** der vorstehend genannten Aufgabe vorgeschlagen, dass das als Kolben ausgebildete Druckausgleichselement zur Bildung eines variablen Druckausgleichsraums bewegt wird. Die Druckausgleichsvorrichtung kann eines oder mehrere der vorstehend genannten Merkmale aufweisen. Es ergeben sich die im Zusammenhang mit der Druckausgleichsvorrichtung erörterten Vorteile.

Weitere Vorteile und Ausgestaltungen einer erfindungsgemäßen Druckausgleichsvorrichtung, einer erfindungsgemäßen Vorrichtung sowie einem erfindungsgemäßen Verfahren werden nachfolgend anhand der in den Figuren dargestellten Ausführungsbeispiele erörtert. Darin zeigen:
- Fig. 1: einen Getränkeautomat ohne Druckausgleichsvorrichtung in einer schematisierten, teilweise geschnittenen Ansicht,
- Fig. 2: einen Getränkeautomat mit einer Druckausgleichsvorrichtung in einer schematisierten, teilweise geschnittenen Ansicht,
- Fig. 3: ein erstes Ausführungsbeispiel einer Druckausgleichsvorrichtung mit zugehörigen Fluidleitungen in einer ersten Stellung in teilweise geschnittener Ansicht,
- Fig. 4: die Druckausgleichsvorrichtung gemäß Fig. 3 mit in einer zweiten Stellung,
- Fig. 5: die Druckausgleichsvorrichtung gemäß der Darstellung in Fig. 3 in perspektivischer Ansicht,
- Fig. 6: die Druckausgleichsvorrichtung gemäß der Darstellung in Fig. 4 in perspektivischer Ansicht,
- Fig. 7: ein zweites Ausführungsbeispiel einer Druckausgleichsvorrichtung in teilweise geschnittener Ansicht,
- Fig. 8: ein drittes Ausführungsbeispiel einer Druckausgleichsvorrichtung in teilweise geschnittener Ansicht,
- Fig. 9: ein viertes Ausführungsbeispiel einer Druckausgleichsvorrichtung in teilweise geschnittener Ansicht,
- Fig. 10: ein fünftes Ausführungsbeispiel einer Druckausgleichsvorrichtung in einer ersten Stellung in teilweise geschnittener Ansicht und
- Fig. 11: die Druckausgleichsvorrichtung gemäß Fig. 10 in einer zweiten Stellung.

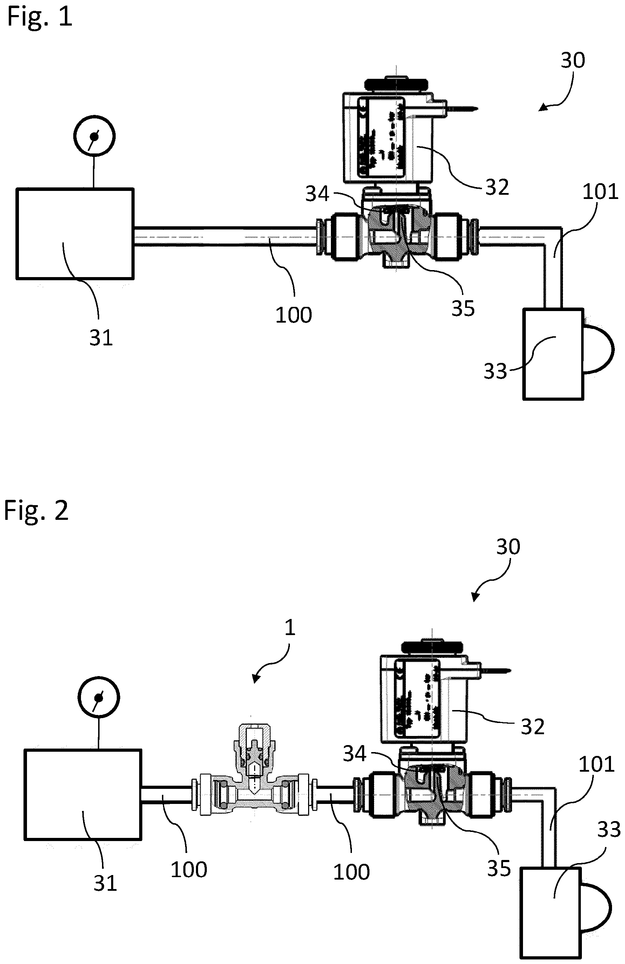

Die Fig. 1 und 2 zeigen jeweils in schematischer Ansicht einen Getränkeautomaten 30, bei dem es sich beispielsweise um einen Kaffeevollautomaten handeln kann. Der Getränkeautomat 30 weist gemäß Fig. 1 einen als Druckboiler ausgestalteten Boiler 31 auf, welcher beim Ausführungsbeispiel Wasser als Fluid F erwärmt, welches zur Zubereitung von Heißgetränken, wie Kaffee, Tee o. Ä., genutzt wird. Der Boiler 31 ist über eine Fluidleitung 100 mit einem Hauptventil 32 verbunden, über welches sich das im Boiler 31 erwärmte Wasser aus dem Getränkeautomaten 30 entnehmen lässt, bspw. in eine Tasse 33.

Das Hauptventil 32 ist als direktschaltendes Ventil ausgestaltet und öffnet und schließt, indem ein aus einem elastischen Material bestehendes Dichtelement 34 einen Ventilsitz 35 freigibt bzw. verschließt. Das Hauptventil 32 ist als 3/2-Wege-Ventil ausgestaltet, wodurch eine vollständige Entleerung des Fluidleitungsauslasses 101 bei der Getränkeentnahme möglich ist. Das Hauptventil 32 weist hierzu einen nicht dargestellten Kanal auf, welcher im geschlossenen Zustand des Hauptventils 32 den Fluidleitungsauslass 101 belüftet, wodurch sich dieser vollständig entleeren kann.

Bei dem Getränkeautomaten 30 wird das Wasser in dem Boiler 31 zunächst erwärmt, über die Fluidleitung 100 zu dem Hauptventil 32 geführt und dort über das Hauptventil 32 entnommen. Anschließend wird das Hauptventil 32 geschlossen, indem das beispielsweise als Dichtring oder Flächendichtung ausgestaltete Dichtelement 34 den Ventilsitz 35 verschließt. Das Fluid F in der Fluidleitung 100 wird hierdurch zwischen dem Boiler 31 und dem geschlossenen Hauptventil 32 eingeschlossen und beginnt allmählich, sich abzukühlen. Aufgrund der damit verbundenen Volumenänderung des Wassers ändern sich die Druckverhältnisse und es entsteht ein Unterdruck in der Fluidleitung 100. Aufgrund dieser Druckschwankung wird das Hauptventil 32 und insbesondere dessen Dichtelement 34 zunehmend auf den Ventilsitz 35 gepresst. Hierdurch können im Laufe der Zeit Schäden an dem Dichtelement 34 auftreten und die Lebensdauer des Getränkeautomaten 30 beeinträchtigt werden oder vergleichsweise enge Wartungsintervalle erforderlich sein.

Aus diesem Grund ist der Getränkeautomat 30 gemäß Fig. 2 im Bereich zwischen dem Boiler 31 und dem Hauptventil 32 mit einer Druckausgleichsvorrichtung 1 ausgestattet, über welche derartige Druckschwankungen ausgeglichen werden. Der Aufbau sowie die Funktionsweise der Druckausgleichsvorrichtung 1 werden nachfolgend noch detaillierter erörtert, wobei darauf hingewiesen sei, dass über die Druckausgleichsvorrichtung 1 nicht nur Unterdrücke, sondern auch Überdrücke kompensiert werden können.

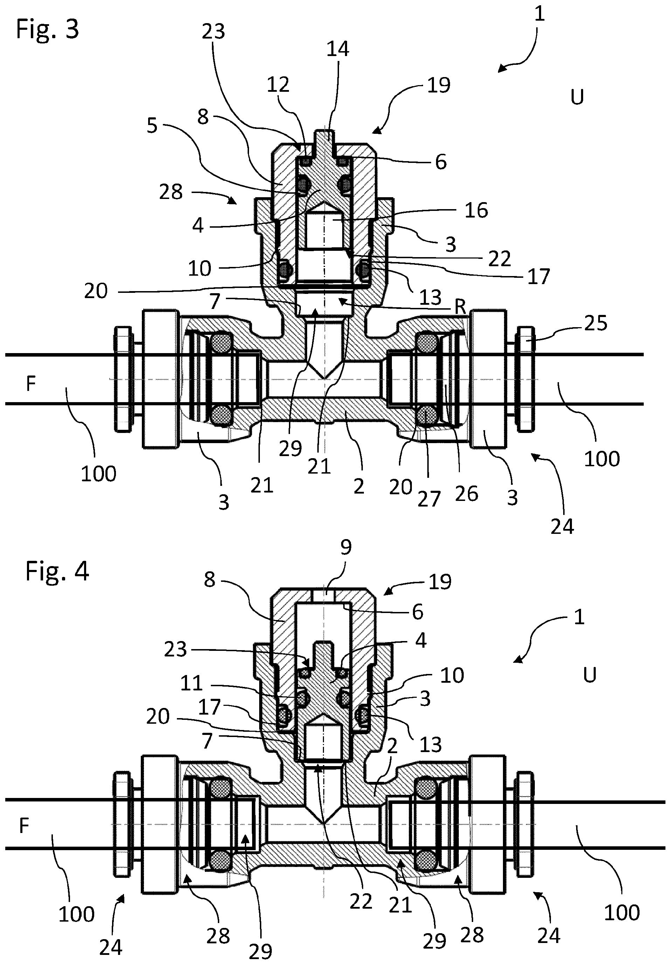

Die Fig. 3 zeigt die Druckausgleichsvorrichtung 1 gemäß Fig. 2 in einer vergrößerten, teilweise geschnittenen Ansicht. Die Druckausgleichsvorrichtung 1 weist ein einstückig ausgestaltetes Gehäuse 2 auf. Das Gehäuse 2 ist als Durchflussgehäuse ausgestaltet, durch welches das Fluid F hindurchströmt. Das Gehäuse 2 weist hierzu drei baugleiche, topfförmig ausgestaltete Anschlüsse 3 auf. Die Anschlüsse 3 sind derart zueinander angeordnet, dass das Gehäuse 2 eine T-formige Gestalt aufweist.

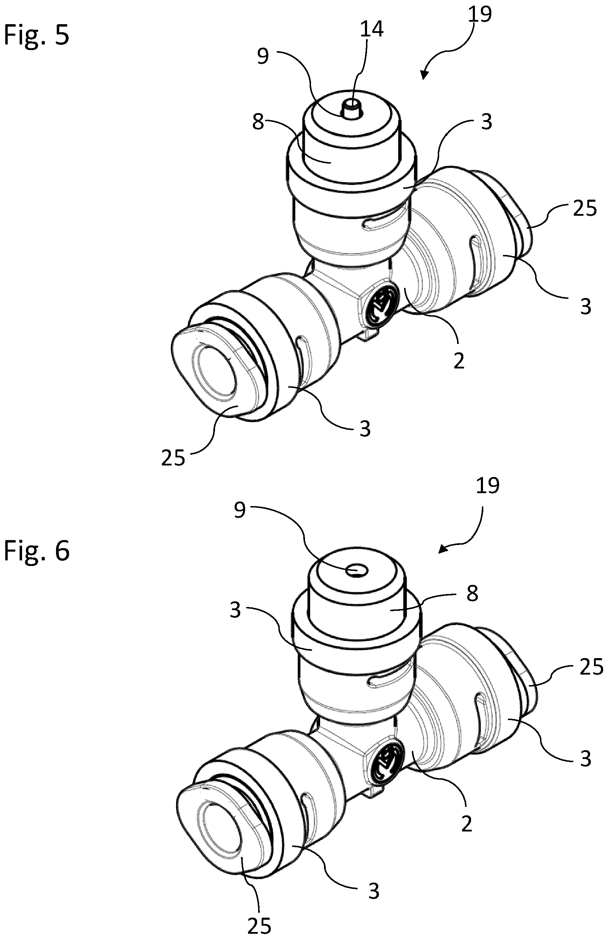

An zwei axial gegenüberliegend angeordneten Anschlüssen 3 ist jeweils eine Fluidleitung 100 angeschlossen, so dass das Gehäuse 2 von dem Fluid F axial durchströmt wird. Diese Anschlüsse 3 sind als Schnellverbinderanschlüsse ausgestaltet und weisen zum Anschluss der Fluidleitungen 100 jeweils einen Schnellverbinder 24 auf. Der Schnellverbinder 24 wird aus einem als Klemmring ausgestalteten Klemmelement 26 und einer druckbetätigbaren Lösebetätigung 25 gebildet. Die Lösebetätigung 25 ist als Lösering ausgestaltet, vgl. auch Fig. 5 und 6. Über die Schnellverbinder 24 der Anschlüsse 3 lässt sich die Fluidleitung 100, beispielsweise ein Rohr oder ein Schlauch, an den jeweiligen Anschluss 3 werkzeuglos anschließen und auch wieder entfernen. Zur Abdichtung der Fluidleitung 100 gegenüber dem Gehäuse 2 ist innerhalb der Anschlüsse 3 als Teil des Schnellverbinders 24 eine Dichtung 27, beispielsweise ein O-Ring, angeordnet.

An dem in der Darstellung der Fig. 3 nach oben gerichteten Anschluss 3 ist anstelle einer Fluidleitung 100 eine Kolbenaufnahme 8 montiert. Der Anschluss 3 weist keinen Schnellverbinder 24 auf, könnte jedoch auch mit einem solchen bestückt werden, da die drei Anschlüsse 3 baugleich ausgebildet sind.

Die Kolbenaufnahme 8 ist einstückig als Einsteckbuchse mit topfförmigem Querschnitt ausgestaltet. Zur Befestigung der Kolbenaufnahme 8 an dem Anschluss 3 weist die Kolbenaufnahme 8 umfangsseitig angeordnete Befestigungsmittel 10 auf. Die Befestigungsmittel 10 sind gemäß Fig. 3 als Rasthaken ausgestaltet. Die Kolbenaufnahme 8 ist in dem Anschluss 3 rastend befestigt. Es sind jedoch auch andere Befestigungsarten denkbar, beispielsweise durch Verschrauben, Klemmen, Kleben o. Ä.

Die Kolbenaufnahme 8 ist gegenüber dem Anschluss 3 über eine Dichtung 13 abgedichtet. Die Dichtung 13 ist als O-Ring ausgestaltet und umfangseitig an der Außenseite der Kolbenaufnahme 8 angeordnet. Die Dichtung 13 wirkt insofern als Radialdichtung. Die Kolbenaufnahme 8 weist zur Aufnahme der Dichtung 13 eine Umfangsnut 17 auf.

Innerhalb der topfförmigen Kolbenaufnahme 8 ist ein Kolben 4 bewegbar gelagert. Der Kolben 4 und die Kolbenaufnahme 8 bilden zusammen eine Montageeinheit 19. Die Montageeinheit 19 ermöglicht eine besonders einfache Montage, indem diese in einem einzigen Montageschritt an einem Anschluss 3 montierbar ist. Beispielsweise ist es denkbar, dass die Montageeinheit 19 in den Anschluss 3 eingeschoben und dann über die Befestigungsmittel 10 der Kolbenaufnahme 8 verrastet wird. Die Montageeinheit 19 ließe sich alternativ auch an einem der beiden anderen Anschlüsse 3 anordnen, bspw. um die Druckausgleichsvorrichtung 1 an einen Anwendungsfall anzupassen.

Die Montageeinheit 19 ist unlösbar an dem Gehäuse 2 montiert. Hierdurch wird vermieden, dass bei Druckschwankungen des Fluids F, insbesondere bei Überdruck, in den Fluidleitungen 100 die Montageeinheit 19 von dem Gehäuse 2 gelöst wird. Durch die unlösbare Montage lassen sich Undichtigkeiten bei Druckschwankungen vermeiden.

Zur definierten Aufnahme der Montageeinheit 19 oder der Fluidleitungen 100 in einem der Anschlüsse 3 weisen die Anschlüsse 3 jeweils zwei Anschlagflächen 20, 21 auf. Die Anschlagflächen 20, 21 sind als ringförmige Anschlagflächen ausgestaltet und in axialer Richtung der Anschlüsse 3 hintereinander angeordnet.

Über die eine Anschlagfläche 20 lässt sich die Montageeinheit 19 auf einfache Weise montieren. Für den Fall, dass an einem Anschluss 3 eine Fluidleitung 100 angeschlossen wird, liegt die Dichtung 27 an der Anschlagfläche 20 des Anschlusses 3 an.

Die andere Anschlagfläche 21 ermöglicht ein definiertes Einstecken der Fluidleitung 100, wenn diese an dem Anschluss 3 montiert wird. Die Fluidleitung 100 wird entlang der Hauptachse des Anschluss 3 bis an die Anschlagfläche 21 hineingeschoben. Die Anschlagfläche 21 begrenzt den Anschluss 3 in axialer Richtung. Für den Fall, dass an den Anschluss 3 eine Montageeinheit 19 angeschlossen wird, ermöglicht die Anschlagfläche 21 eine Begrenzung der Bewegung des Kolbens 4. Der Durchmesser des Kolbens 4 ist im Wesentlichen gleich zum Durchmesser der Anschlagfläche 21 ausgestaltet.

In axialer Richtung unterteilen sich die Anschlüsse 3 in zwei Bereiche, einen Montagebereich 28 und einen zur Gehäusemitte hin orientierten Aufnahmebereich 29. Die Bereiche 28, 29 werden durch die Anschlagflächen 20, 21 begrenzt.

Der Montagebereich 28 ermöglicht die Anordnung des Schnellverbinders 24 in dem Anschluss 3. Der Montagebereich 28 ist derart ausgestaltet, dass eine Dichtung 27, ein Klemmelement 26 und eine Lösebetätigung 25 in axialer Richtung hintereinander in den Anschluss 3 befestigbar sind. Der Montagebereich 28 ist im Wesentlichen zylinderförmig ausgestaltet und weist zum Aufnahmebereich 29 eine Abstufung auf, welche die Montage des Schnellverbinders 24 vereinfacht. Die Abstufung entspricht gemäß Fig. 3, 4 der Anschlagfläche 20. Für den Fall, dass an den Anschluss 3 eine Montageeinheit 19 montiert wird, ermöglicht der Montagebereich 28 die Montage der Montageeinheit 19. Hier wird die Montageeinheit 19 in axialer Richtung in den Montagebereich 28 gesteckt, bis diese an der Abstufung zur Anlage kommt.

Der Aufnahmebereich 29 grenzt an den Montagebereich 28 und ermöglicht die Aufnahme der Fluidleitung 100. Der Aufnahmebereich 29 ist zylindrisch ausgestaltet und weist einen kleineren Durchmesser als der Montagebereich 28 auf. Der Aufnahmebereich 29 weist ebenfalls eine Abstufung auf, welche der Anschlagfläche 21 entspricht. Bei an dem Anschluss 3 angeschlossener Fluidleitung 100 ist das Ende der Fluidleitung 100 in dem Aufnahmebereich 29 angeordnet. Für den Fall, dass an dem Anschluss 3 eine Montageeinheit 19 montiert ist, kann der Kolben 4 in den Aufnahmebereich 29 hineinbewegt werden. Der Kolben 4 ist daher derart ausgestaltet, dass der Kolben 4 in den Aufnahmebereich 29 hineinbewegbar ist. Hierfür ist der Durchmesser des Kolbens 4 im Wesentlichen gleich zu dem Durchmesser des Aufnahmebereichs 29. Über die Größe des Aufnahmebereichs 29 lässt sich der maximale Druckausgleichsraum R festlegen.

Der im Wesentlichen zylindrische Kolben 4 ist gegenüber der Kolbenaufnahme 8 über mehrere Dichtmittel abgedichtet, wobei es hier alternativ ebenso möglich wäre, ein einziges Dichtmittel vorzusehen. Umfangsseitig an der Außenfläche des Kolbens 8 ist eine erste als O-Ring ausgestaltete Dichtung 11 vorgesehen. Zur Anordnung der Dichtung 11 an der Außenfläche des Kolbens 4 weist dieser eine Umlaufnut 5 auf, in welcher die Dichtung 11 angeordnet ist. An der Stirnfläche des Kolbens 4 ist eine als O-Ring ausgestaltete Dichtung 12 angeordnet. Die als redundante Dichtungen ausgestalteten Dichtmittel 11, 12 können auch bei hohen Druckschwankungen bzw. Druckspitzen innerhalb der Fluidleitungen 100 eine ausreichende Dichtwirkung sicherstellen. Die Dichtmittel 11, 12 sowie die Dichtung 13 können Bestandteile der Montageeinheit 19 sein. Darüber hinaus kann die Dichtung 12 im Falle von Verschleiß der Dichtung 11 die Dichtwirkung weiterhin garantieren.

Auf der einen Seite weist der in der Kolbenaufnahme 8 gelagerte Kolben 4 eine Fluidseite 22 auf. Auf der anderen Seite weist der Kolben 4 eine Trockenseite 23 auf. Die Fluidseite 22 des Kolbens 4 ist dabei die Seite, die dem Fluid F zugewandt ist. An der Fluidseite 22 steht der Kolben 4 in Kontakt zu dem Fluid F, weshalb auf der Fluidseite 22 der Fluiddruck anliegt. Die der Fluidseite 22 gegenüberliegende Trockenseite 23 ist dem Fluid F abgewandt und liegt im Trockenen. Zwischen der Fluidseite 22 und der Trockenseite 23 sind zwei Dichtungen 11, 12 am Kolben 4 angeordnet, welche die Fluidseite 22 und die Trockenseite 23 gegeneinander abdichten. An der Trockenseite 23 liegt Umgebungsdruck der Umgebung U an. Eine Druckausgleichsöffnung 9 dient dem Druckausgleich im Inneren der Kolbenaufnahme 8 auf der Trockenseite 23 des Kolbens 4 mit dem Umgebungsdruck.

Die Bewegung des in der Kolbenaufnahme 8 gelagerten Kolbens 4 ist durch Anschläge 6, 7 begrenzt, vgl. auch Fig. 4. Der Anschlag 6 ist als Teil der Kolbenaufnahme 8 ausgestaltet und begrenzt die Bewegung des Kolbens 4 in der einen Richtung, in der Darstellung gemäß Fig. 3 nach oben. Der Anschlag 7 ist als Teil der Gehäuses 3 ausgestaltet und begrenzt die Bewegung des Kolbens 4 in der entgegengesetzten Richtung, in der Darstellung gemäß Fig. 3 nach unten. Der am Gehäuse 3 angeordnete Anschlag 7 entspricht der Anschlagfläche 21. Die Anschläge 6, 7 sind als Ringflächen ausgestaltet, gegen welche der Kolben 4 flächig anschlägt.

Der Kolben 4 weist darüber hinaus einen an der Trockenseite 23 angeordneten Indikator 14 auf, auf dessen Funktionsweise nachfolgend im Zusammenhang mit den Fig. 5 und 6 noch genauer eingegangen wird. Der Indikator 14 ist als zylindrischer Indikatorpin ausgestaltet, wobei hier ebenso abweichende Ausgestaltungen, beispielsweise als kegelförmiger Indikatorpin, als Farbindikator, als akustischer Indikator oder anderen optischen Indikatoren, möglich sind.

In der Fig. 3 befindet sich der Kolben 4 in einer ersten Stellung. Der Druck des Fluids F in den Fluidleitungen 100 ist gleich oder größer dem Umgebungsdruck, weshalb der Kolben 4 in die erste Stellung bewegt ist. Dies ist beispielsweise beim Betrieb des Getränkeautomaten 30 der Fall, vgl. Fig. 2. Unterhalb des Kolbens 4 ist ein Druckausgleichsraum R ausgebildet. Der Druckausgleichsraum R ist in Abhängigkeit der Position des Kolbens 4 variabel. In der ersten Stellung des Kolbens 4 ist der Druckausgleichsraum R maximal groß.

Aus dieser ersten Stellung gemäß Fig. 3 kann die Druckausgleichsvorrichtung 1 Druckschwankungen des Fluids F ausgleichen. Druckschwankungen können beispielsweise auftreten, wenn das Fluid F abkühlt und sich das Volumen des Fluids F innerhalb der Fluidleitungen 100 reduziert. Dies ist beispielsweise beim Abschalten des Getränkeautomaten 30 der Fall, wenn das Fluid F nicht weiter über den Boiler 31 temperiert wird, vgl. auch Fig. 2. Aufgrund des sinkenden Druckes wird der Kolben 4 in der Kolbenaufnahme 8 aus der ersten Stellung nach in Fig. 3 unten gesaugt. Hierdurch wird der Druckausgleichsraum R verkleinert und die Volumenänderung des Fluids F ausgeglichen. Durch die Bewegung des Kolbens 4 stellt sich ein Druckgleichgewicht zwischen den auf der Fluidseite 22 und der Trockenseite 23 herrschenden Drücken ein. Es ist möglich, dass der Kolben 4 in einer Stellung zwischen der ersten Stellung, in welcher der Kolben 4 an dem Anschlag 6 anschlägt, und der zweiten Stellung, in welcher der Kolben 4 an dem Anschlag 7 anschlägt, einnimmt.

In der Fig. 4 befindet sich der Kolben 4 in der zweiten Stellung. Aus dieser zweiten Stellung kann die Druckausgleichsvorrichtung 1 ebenfalls Druckschwankungen des Fluids F ausgleichen. Beispielsweise ist es denkbar, dass das Fluid F erwärmt wird, woraus eine Vergrößerung des Volumens des Fluids F innerhalb der Fluidleitungen 100 resultiert. Hierdurch steigt der Druck innerhalb der Fluidleitungen 100 und der Kolben 4 wird zum Ausgleich in der Fig. 4 oben bewegt. Hierdurch wird der Druckausgleichsraum R entsprechend vergrößert. Auch hier stellt sich ein Druckgleichgewicht über den Kolben 4 ein.

Die Größe des Druckausgleichsraums R entspricht der maximalen Volumenänderung des Fluids F, welche durch die Druckausgleichsvorrichtung 1 ausgleichbar ist. Beim Ausführungsbeispiel gemäß Fig. 4 tritt der Kolben 4 in dessen zweiter Stellung zumindest teilweise aus der Kolbenaufnahme 8 heraus, wodurch sich ein größerer Druckausgleichsraum R realisieren lässt.

In Fig. 5 und Fig. 6 ist die Druckausgleichsvorrichtung 1 in perspektivischer Ansicht von außen dargestellt. In Fig. 5 befindet sich der Kolben 4 in der ersten Stellung gemäß Fig. 3 und in Fig. 6 in der zweiten Stellung gemäß Fig. 4. Zur Vereinfachung der Darstellung wurde in diesen Figuren auf eine Darstellung der Fluidleitungen 100 verzichtet.

Anhand der Darstellungen der Fig. 5 und Fig. 6 lässt sich die Funktionsweise des Indikators 14 erkennen. Der als Indikatorpin, in einer gut erkennbaren Signalfarbe ausgestaltete Indikator 14 ist auf der Trockenseite 23 des Kolbens 4 angeordnet, vgl. Fig. 3, 4. In der ersten Stellung des Kolbens 4 gemäß Fig. 5 ist der Indikator 14 durch die Druckausgleichsöffnung 9 der Kolbenaufnahme 8 hindurchbewegt. Hierdurch ist für einen Benutzer anhand des Indikators 14 erkennbar, dass sich der Kolben 4 in der ersten Stellung befindet. Der Druckausgleichsöffnung 9 kommt also eine Doppelfunktion zu. Zum einen wird durch diese, wie zuvor erläutert, der an der Trockenseite 23 des Kolbens 4 anliegende Druck gegenüber der Umgebung ausgeglichen. Zum anderen wirkt diese mit dem Indikator 14 zusammen und erlaubt ein Ablesen der Stellung des Kolbens 4 auch von außerhalb der Kolbenaufnahme 8.

In der zweiten Stellung des Kolbens 4 gemäß Fig. 6 ist der Indikator 14 nicht durch die Druckausgleichsöffnung 9 hindurchbewegt und insofern von außen nicht sichtbar. Es ist möglich, dass der Indikator 14 ebenso Zwischenstellungen des Kolbens 4 anzeigt, beispielsweise indem der Indikatorpin nicht vollständig durch die Druckausgleichsöffnung 9 hindurchbewegt ist. Es ist in diesem Zusammenhang möglich, dass der Indikatorpin eine Skala aufweist, welche die Stellung, insbesondere die Zwischenstellung des Kolbens 4 aufweist.

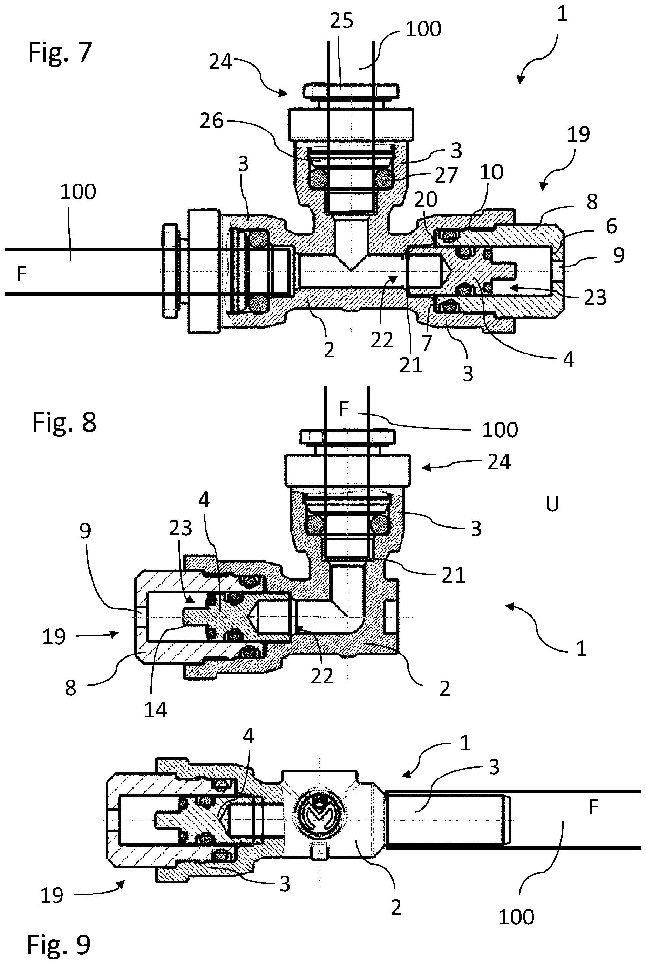

Die Fig. 7 bis 9 zeigen weitere Ausführungsbeispiele erfindungsgemäßer Druckausgleichsvorrichtungen 1. Es wird nachfolgend vornehmlich auf die Unterschiede zu der vorstehend erörterten Druckausgleichsvorrichtung gemäß Fig. 3 eingegangen werden.

Die in der Fig. 7 dargestellte Druckausgleichsvorrichtung 1 ist baugleich zu der Druckausgleichsvorrichtung 1 der Fig. 3 ausgestaltet, wobei die Montageeinheit 19 an einem der Fluidleitung 100 gegenüberliegenden Anschluss 3 montiert ist. Es ergibt sich ein um 90° abgewinkeltes Durchflussgehäuse. Aufgrund der baugleichen Ausgestaltung der Anschlüsse 3 ist die wahlweise Montage der Montageeinheit 19 an einem beliebigen Anschluss 3 möglich. Sollte beispielsweise die Montageeinheit 19 von dem in der Darstellung rechtsseitigen Anschluss 3 an den oberen Anschluss 3 montiert werden, so wäre zunächst der an dem oberen Anschluss 3 montierte Schnellverbinder 24 zu entfernen, die Montageeinheit 19 von dem rechtsseitigen Anschluss 3 zu demontieren und anschließend an dem oberen Anschluss 3 zu montieren. Der Schnellverbinder 24 könnte dann an den rechtsseitigen Anschluss 3 montiert werden.

Bei den in den Fig. 8 und Fig. 9 dargestellten Druckausgleichsvorrichtungen 1 ist das Gehäuse 2 als Stauraumgehäuse ausgestaltet. Die Gehäuse 2 weisen daher jeweils lediglich zwei Anschlüsse 3 auf. An einen der Anschlüsse 3, in den Darstellungen der linksseitige Anschluss 3, ist die aus Kolben 4 und Kolbenaufnahme 8 gebildete Montageeinheit 19 angeordnet. An den anderen Anschluss 3 ist eine Fluidleitung 100 angeordnet.

Der Anschluss 3 der Fluidleitung 100 ist bei dem Ausführungsbeispiel gemäß Fig. 8, wie vorstehend erläutert, als Schnellverbinderanschluss mit einem Schnellverbinder 24 ausgestaltet. Ferner ist das Gehäuse 2 hier L-förmig ausgestaltet.

Bei dem Ausführungsbeispiel der Fig. 9 ist der Anschluss 3 der Fluidleitung 100 als Steckanschluss ausgestaltet, auf welchen die Fluidleitung 100, bspw. ein Schlauch, einfach aufsteckbar ist. Das Gehäuse 2 ist hier I-förmig ausgestaltet.

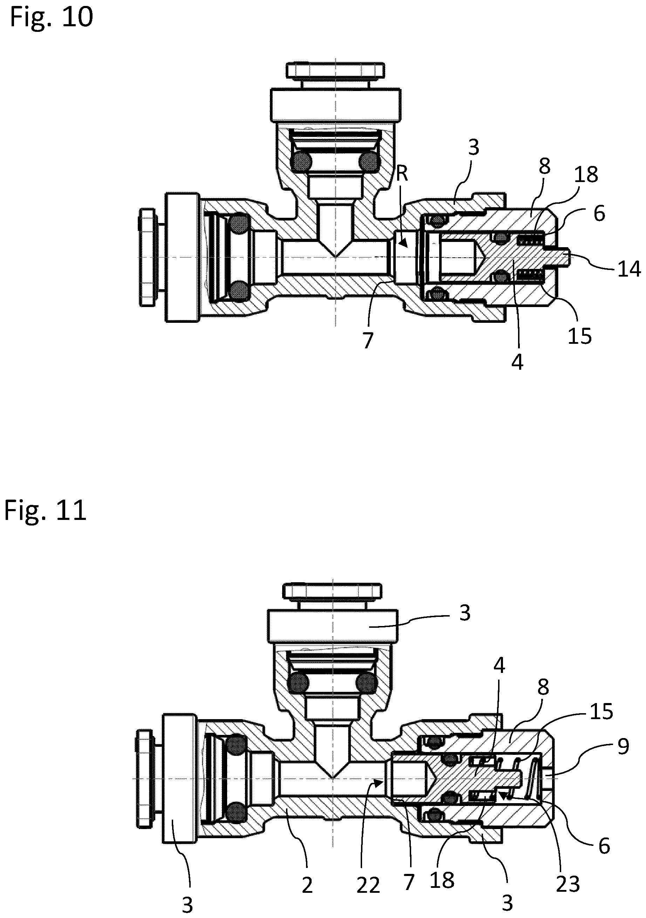

In Fig. 10 und Fig. 11 ist ein weiteres, besonders vorteilhaftes Ausführungsbeispiel einer Druckausgleichsvorrichtung 1 dargestellt, welche im Wesentlichen baugleich zu der in Fig. 7 dargestellten Druckausgleichsvorrichtung 1 ist, jedoch einen federkraftbeaufschlagten Kolben 4 aufweist. Es wird nachfolgend auch an dieser Stelle vornehmlich auf die Unterschiede zu den vorstehenden Ausführungsbeispielen, insbesondere zu dem Ausführungsbeispiel gemäß Fig. 3, eingegangen werden.

Die Druckausgleichsvorrichtung 1 weist eine als Rückstellfeder dienende Feder 15 auf. Die Feder 15 ist Bestandteil der Montageeinheit 19. Die Feder 15 ist auf der Trockenseite 23 des Kolbens 4 angeordnet. Die als Druckfeder ausgestaltete Feder 15 spannt den Kolben 4 in Richtung der Fluidseite 22 vor. Hierdurch wird die Trockenseite 23 des Kolbens 4 nun zusätzlich zum Umgebungsdruck der Umgebung U mit der Federkraft der Feder 15 beaufschlagt. Das Ansprechverhalten des Kolbens 4 kann über die Feder 15 eingestellt werden.

Insbesondere aus Fig. 10 ist ersichtlich, dass die Feder 15 in deren eingefedertem Zustand von einer Federaufnahme 18 aufgenommen ist. Hierdurch ist es möglich, dass der Kolben 4 weiterhin an dem Anschlag 6 anschlagen kann. Die erste Stellung des Kolbens 4 ändert sich daher durch die Anordnung der Feder 15 nicht. Die Federaufnahme 18 ist als umlaufende Nut ausgestaltet, welche an der Stirnfläche des Kolbens 4 angeordnet ist.

Aufgrund der zusätzlichen Beaufschlagung des Kolbens 4 mit einer Federkraft eignet sich die in den Fig. 10 und 11 dargestellte Druckausgleichsvorrichtung 1 insbesondere für den Ausgleich von Druckspitzen des Fluids F in der hier nicht dargestellten Fluidleitung 100.

Wird in den Fluidleitungen 100 der Betriebsdruck, wie beispielsweise 4 bar, erzeugt, so verbleibt der Kolben 4 zunächst in der Stellung gemäß Fig. 11. Die Feder 15 ist entsprechend dem gewünschten Betriebsdruck auszuwählen. Kommt es nun innerhalb der Fluidleitung 100 zu einem plötzlichen Druckanstieg des Fluids F, also einer unerwünschten Druckspitze, so kann diese durch Bewegung des Kolbens 4 hin zur ersten Stellung gemäß Fig. 10 ausgeglichen werden, indem der Druckausgleichsraums R entsprechend vergrößert wird.

Die vorstehend im Zusammenhang mit den Fig. 1 bis 11 beschriebenen Druckausgleichsvorrichtungen 1 zeichnen sich durch ein als bewegbarer Kolben 4 ausgestaltetes Druckausgleichselement zur Bildung eines variablen Druckausgleichsraum R aus, woraus ein besonders einfacher Aufbau der Druckausgleichsvorrichtungen 1 resultiert.

### Bezugszeichen:

- 1: Druckausgleichsvorrichtung
- 2: Gehäuse
- 3: Anschluss
- 4: Kolben
- 5: Umlaufnut
- 6: Anschlag
- 7: Anschlag
- 8: Kolbenaufnahme
- 9: Druckausgleichsöffnung
- 10: Befestigungsmittel
- 11: Dichtung
- 12: Dichtung
- 13: Dichtung
- 14: Indikator
- 15: Feder
- 16: Ausnehmung
- 17: Umfangsnut
- 18: Federaufnahme
- 19: Montageeinheit
- 20: Anschlagfläche
- 21: Anschlagfläche
- 22: Fluidseite
- 23: Trockenseite
- 24: Schnellverbinder
- 25: Lösebetätigung
- 26: Klemmelement
- 27: Dichtung
- 28: Montagebereich
- 29: Aufnahmebereich
- 30: Getränkeautomat
- 31: Boiler
- 32: Hauptventil
- 33: Tasse
- 34: Dichtelement
- 35: Ventilsitz

- 100: Fluidleitung
- 101: Fluidleitungsauslass

- U: Umgebung
- F: Fluid
- R: Druckausgleichsraum

## Patentansprüche

1. Druckausgleichsvorrichtung zum Ausgleich von Druckschwankungen eines Fluids (F) in einer Fluidleitung (100) mit einem Gehäuse (2), das einen Anschluss (3) zum Anschließen der Fluidleitung (100) aufweist, und einem Druckausgleichselement (4), das zum Ausgleich der Druckschwankungen gegenüber dem Gehäuse (2) bewegbar angeordnet ist,
**dadurch gekennzeichnet,**
**dass** das Druckausgleichselement (4) zur Bildung eines variablen Druckausgleichsraums (R) als bewegbarer Kolben ausgebildet ist,
wobei der Kolben (4) in einer Kolbenaufnahme (8) geführt ist, wobei die Kolbenaufnahme (8) und der Kolben (4) eine unlösbar oder lösbar an einem Anschluss (3) des Gehäuses (2) montierbare Montageeinheit (19) bilden, wobei der Anschluss (3) der Montageeinheit (19) und der Anschluss (3) der Fluidleitung (100) baugleich ausgestaltet sind und die Montageeinheit (19) wahlweise an einem der Anschlüsse (3) montierbar ist, wobei die Montageeinheit (19) an einem der Anschlüsse (3) des Gehäuses (2) montiert ist, wobei die Anschlüsse (3) jeweils mindestens zwei in axialer Richtung beabstandete Anschlagflächen (20, 21) aufweisen, wobei über die eine Anschlagfläche (20) die Lage der Montageeinheit (19) und über die andere Anschlagfläche (21) die Lage der Fluidleitung (100) festlegbar ist.

2. Druckausgleichsvorrichtung nach Anspruch 1, **dadurch gekennzeichnet, dass** der Kolben (4) zwischen zwei Anschlägen (6, 7) hin und her bewegbar ist.

3. Druckausgleichsvorrichtung nach Anspruch 1 oder 2, **dadurch gekennzeichnet, dass** an der Fluidseite (22) des Kolbens (4) der Druck des Fluids (F) und an der gegenüberliegenden Trockenseite (23) des Kolbens (4) der Umgebungsdruck anliegt.

4. Druckausgleichsvorrichtung nach Anspruch 1, **dadurch gekennzeichnet, dass** der Kolben (4) über Dichtmittel (11, 12) gegenüber der Kolbenaufnahme (8) abgedichtet ist.

5. Druckausgleichsvorrichtung nach Anspruch 1 oder 4, **dadurch gekennzeichnet, dass** die Kolbenaufnahme (8) auf der Trockenseite (23) des Kolbens (4) eine Druckausgleichsöffnung (9) aufweist.

6. Druckausgleichsvorrichtung nach einem der Ansprüche 1, 4 oder 5, **dadurch gekennzeichnet, dass** die Kolbenaufnahme (8) umfangsseitig gegenüber dem Gehäuse (2) über eine Dichtung (13) abgedichtet ist.

7. Druckausgleichsvorrichtung nach einem der vorhergehenden Ansprüche, **dadurch gekennzeichnet, dass** das Gehäuse (2) als Durchflussgehäuse mit einem dritten Anschluss (3) zum Anschließen einer zweiten Fluidleitung (100) ausgestaltet ist.

8. Druckausgleichsvorrichtung nach einem der vorhergehenden Ansprüche, **gekennzeichnet durch** einen an dem Kolben (4) angeordneten Indikator (14) zur Anzeige des Drucks in der Fluidleitung (100).

9. Vorrichtung, insbesondere Getränkeautomat (30), mit einem Boiler (31) zum Erwärmen eines Fluids (F), einem Hauptventil (32) zur Entnahme des Fluids (F) über eine Fluidleitung (100) und einer Druckausgleichsvorrichtung (1) zum Ausgleich von Druckschwankungen des Fluids (F) in der Fluidleitung (100) infolge von Temperaturschwankungen des Fluids (F),
**dadurch gekennzeichnet,**
**dass** die Druckausgleichsvorrichtung (1) nach einem der Ansprüche 1 bis 8 ausgestaltet ist.

10. Verfahren zum Ausgleich von Druckschwankungen eines Fluids (F) in einer Fluidleitung (100) mit einer Druckausgleichsvorrichtung (1) nach einem der Ansprüche 1 bis 8, bei welcher die Fluidleitung (100) an einen Anschluss (3) eines Gehäuses (2) angeschlossen wird und ein Druckausgleichselement (4) zum Ausgleich von Druckschwankungen gegenüber dem Gehäuse (2) bewegt wird,
**dadurch gekennzeichnet,**
**dass** das als Kolben ausgebildete Druckausgleichselement (4) zur Bildung eines variablen Druckausgleichsraums (R) bewegt wird.

## Claims

1. Pressure compensation device for compensating for pressure fluctuations of a fluid (F) in a fluid line (100), having a housing (2), which has a connection (3) for connecting the fluid line (100), and a pressure compensation element (4), which is arranged movably with respect to the housing (2) in order to compensate for the pressure fluctuations,
**characterized in that**
the pressure compensation element (4) is designed as a movable piston in order to form a variable pressure compensation space (R), the piston (4) being guided in a piston receptacle (8), the piston receptacle (8) and the piston (4) forming an assembly unit (19) which can be mounted non-detachably or detachably on a connection (3) of the housing (2) wherein the connection (3) of the assembly unit (19) and the connection (3) of the fluid line (100) are of identical design and the assembly unit (19) is selectively mountable on one of the connections (3), wherein the assembly unit (19) is mounted on one of the connections (3) of the housing (2), wherein the connections (3) each have at least two stop surfaces (20, 21) spaced apart in the axial direction, wherein the position of the assembly unit (19) can be fixed via one stop surface (20) and the position of the fluid line (100) can be fixed via the other stop surface (21).

2. Pressure compensation device according to claim 1, **characterized in that** the piston (4) can be moved back and forth between two stops (6, 7).

3. Pressure compensation device according to claim 1 or 2, **characterized in that** the pressure of the fluid (F) is applied to the fluid side (22) of the piston (4) and the ambient pressure is applied to the opposite dry side (23) of the piston (4).

4. Pressure compensation device according to claim 1, **characterized in that** the piston (4) is sealed off from the piston holder (8) via sealing means (11, 12).

5. Pressure compensation device according to claim 1 or 4, **characterized in that** the piston receptacle (8) has a pressure equalization opening (9) on the dry side (23) of the piston (4).

6. Pressure compensation device according to one of claims 1 , 4 or 5, **characterized in that** the piston receptacle (8) is sealed peripherally with respect to the housing (2) via a seal (13).

7. Pressure compensation device according to one of the preceding claims, **characterized in that** the housing (2) is designed as a flow-through housing with a third connection (3) for connecting a second fluid line (100).

8. Pressure compensation device according to any of the preceding claims, **characterized by** an indicator (14) arranged on the piston (4) for indicating the pressure in the fluid line (100).

9. Device, in particular beverage dispenser (30), having a boiler (31) for heating a fluid (F), a main valve (32) for withdrawing the fluid (F) via a fluid line (100), and a pressure compensation device (1) for compensating for pressure fluctuations of the fluid (F) in the fluid line (100) as a result of temperature fluctuations of the fluid (F),
**characterized in that**
the pressure compensation device (1) is designed according to one of claims 1 to 8.

10. Method for compensating for pressure fluctuations of a fluid (F) in a fluid line (100) with a pressure compensation device (1 ) according to one of claims 1 to 8, in which the fluid line (100) is connected to a connection (3) of a housing (2) and a pressure compensation element (4) is moved to compensate for pressure fluctuations with respect to the housing (2), **characterized in that**
the pressure compensation element (4), which is designed as a piston, is moved to form a variable pressure compensation space (R).

## Revendications

1. Dispositif de compensation de pression pour compenser les variations de pression d'un fluide (F) dans une conduite de fluide (100), comprenant un boîtier (2) qui présente un raccord (3) pour raccorder la conduite de fluide (100), et un élément (4) de compensation de pression qui est disposé de manière mobile par rapport au boîtier (2) pour compenser les variations de pression,
**caractérisé en ce que**
l'élément (4) de compensation de pression est réalisé sous forme de piston mobile pour former un espace de compensation de pression (R) variable, le piston (4) étant guidé dans un logement de piston (8), le logement de piston (8) et le piston (4) formant une unité de montage (19) apte à être montée de manière inamovible ou amovible sur un raccord (3) du boîtier (2), le raccord (3) de l'unité de montage (19) et le raccord (3) de la conduite de fluide (100) étant de conception identique et l'unité de montage (19) étant apte à être montée au choix sur l'un des raccords (3), l'unité de montage (19) étant montée sur l'un des raccords (3) du boîtier (2), les raccords (3) présentant chacun au moins deux surfaces de butée (20, 21) espacées dans la direction axiale, la position de l'unité de montage (19) étant apte à être déterminée par l'une des surfaces de butée (20) et la position de la conduite de fluide (100) étant apte à être déterminée par l'autre surface de butée (21).

2. Dispositif de compensation de pression selon la revendication 1, **caractérisé en ce que** le piston (4) est apte à être déplacé en va-et-vient entre deux butées (6, 7).

3. Dispositif de compensation de pression selon la revendication 1 ou la revendication 2, **caractérisé en ce que** la pression du fluide (F) est appliquée sur le côté de fluide (22) du piston (4) et **en ce que** la pression ambiante est appliquée sur le côté sec opposé (23) du piston (4).

4. Dispositif de compensation de pression selon la revendication 1, **caractérisé en ce que** le piston (4) est rendu étanche par rapport au logement de piston (8) par des moyens d'étanchéité (11, 12).

5. Dispositif de compensation de pression selon la revendication 1 ou 4, **caractérisé en ce que** le logement de piston (8) présente une ouverture (9) de compensation de pression sur le côté sec (23) du piston (4).

6. Dispositif de compensation de pression selon l'une des revendications 1, 4 ou 5, **caractérisé en ce que** le logement du piston (8) est rendu étanche sur sa périphérie par rapport au boîtier (2) par l'intermédiaire d'un joint d'étanchéité (13).

7. Dispositif de compensation de pression selon l'une des revendications précédentes, **caractérisé en ce que** le boîtier (2) est conçu sous la forme d'un boîtier d'écoulement ayant un troisième raccord (3) pour le raccordement d'une deuxième conduite de fluide (100).

8. Dispositif de compensation de pression selon l'une des revendications précédentes, **caractérisé par** un indicateur (14) disposé sur le piston (4) pour indiquer la pression dans la conduite de fluide (100).

9. Dispositif, en particulier distributeur de boissons (30), comprenant une chaudière (31) pour chauffer un fluide (F), une vanne principale (32) pour prélever le fluide (F) via une conduite de fluide (100) et un dispositif de compensation de pression (1) pour compenser les variations de pression du fluide (F) dans la conduite de fluide (100) en raison des variations de température du fluide (F),
**caractérisé**
**en ce que** le dispositif de compensation de pression (1) est conçu selon l'une des revendications 1 à 8.

10. Procédé de compensation des variations de pression d'un fluide (F) dans une conduite de fluide (100) comprenant un dispositif de compensation de pression (1) selon l'une des revendications 1 à 8, dans lequel la conduite de fluide (100) est raccordée à un raccord (3) d'un boîtier (2) et un élément (4) de compensation de pression est déplacé par rapport au boîtier (2) pour compenser les variations de pression,
**caractérisé**
**en ce que** l'élément (4) de compensation de pression, réalisé sous forme de piston, est déplacé de façon à former un espace de compensation de pression (R) variable.
